# EUROPÄISCHE PATENTSCHRIFT

(11) **EP 4 079 151 B1**
(45) Veröffentlichungstag und Bekanntmachung des Hinweises auf die Patenterteilung: **27.11.2024**
(21) Anmeldenummer: 22161013.2
(22) Anmeldetag: 09.03.2022
(51) Int. Cl.: A01K 59/04, B04B 13/00

(54) **VERFAHREN ZUM AUSSCHLEUDERN VON HONIGWABEN UND HONIGSCHLEUDER**
METHOD OF EXTRACTING HONEYCOMB AND HONEY EXTRACTOR
PROCÉDÉ D'EXTRACTION DE RAYONS DE MIEL ET EXTRACTEUR CENTRIFUGE À MIEL

(30) Priorität: 22.04.2021 DE 102021002118
(43) Veröffentlichungstag der Anmeldung: 26.10.2022
(73) Patentinhaber: Groschopp AG Drives & More, 41747 Viersen (DE)
(72) Erfinder: Andric, Aleksandar, 41751 Viersen (DE)
(74) Vertreter: Cohausz & Florack

(56) Entgegenhaltungen:
- EP-B1- 3 169 440
- CN-A- 112 450 130
- DE-A1- 19 539 633
- DE-U1- 8 708 266
- US-B1- 6 328 897

## Beschreibung

Die Erfindung betrifft ein Verfahren zum Ausschleudern von Honigwaben in einem Behälter, in dem Waben in Aufnahmen eines drehbaren Korb mit einer Rotationsachse eingesetzt werden, danach der Korb über einen Antrieb, der einen Motor umfasst, in Rotation versetzt wird, so dass der Honig aufgrund der Zentrifugalkraft aus den Wabenzellen herausgetrieben wird und an einer Behälterwand zu einer Auslassöffnung herunterrinnt, wo der Honig entnommen wird, und wobei die Drehgeschwindigkeit des Korbes über eine Steuerungseinheit auf einen Wert eingestellt wird, mit dem die Waben durch die auftretende Zentrifugalkraft nicht beschädigt werden.

Ferner betrifft die Erfindung eine Honigschleuder zur Durchführung des Verfahrens.

Honigschleudern werden von unterschiedlichsten Herstellern in verschiedenen Ausführungsformen vertrieben und sind bekannt. Der Behälter ist in der Regel ein zylindrischer Topf aus Edelstahl mit einem Außendurchmesser zwischen 400 und 1000 mm. Darin befindet sich wenigstens ein sogenannter Korb, der Aufnahmen für eine oder mehrere Waben aufweist (vgl. Dokument CN 112 450 130 A).

Unter dem Begriff Wabe wird hier die Honigwabe mit ihren Wabenzellen in einem sogenannten Rähmchen verstanden, die der Beute (Bienenstockbehausung) entnommen wurde. Die Rähmchen sind in der Regel aus Holz mit Kantenlängen zwischen 150 und 450 mm und können in der Beute beispielsweise mit weiteren Rähmchen eingesetzt werden. Bienen bauen das Rähmchen mit Hilfe von Bienenwachs zu einer Wabe aus, die die bekannten sechseckigen Wabenzellen aufweisen.

Obwohl es auch manuelle Kurbelantriebe mit Freilauf gibt, beschränkt sich diese Erfindung auf drehbar gelagerte Körbe, die motorisch angetrieben werden. Ihre Rotationsachse ist in der Regel senkrecht.

Bei den Honigschleudern unterscheidet man im Wesentlichen
a) Tangentialschleudern
b) Radialschleudern und
c) Selbstwendeschleudern.

Bei den Tangentialschleudern werden die Waben tangential innerhalb des Korbes in eine Halterung eingebracht. Bei der Rotation des Korbes wird der Honig zunächst nur auf der der Behälterwand zugewandten Seite herausgeschleudert, bis die Wabe von Hand gewendet wird.

Bei der Radialschleuder befinden sich die Waben sternförmig in den Aufnahmen des Korbes und es werden durch die Fliehkräfte beide Seiten der Wabe, also der dort befindlichen Wabenzellen entleert. Dieses Verfahren ist aber anfällig für Wabenbrüche.

Bei der dritten Schleuder schwenkt jede Aufnahme des Korbes von einer radial ausgerichteten Ausgangsstellung je nach Drehrichtung des Korbes um eine Achse bis in eine zumindest nahezu tangentiale Stellung, so dass beide Seiten entleert werden können, wenn man die Drehrichtung des Korbes wechselt.

Zur Begriffserläuterung in dieser Anmeldung wird unter einer Aufnahme ein in der Regel käfigartiges Fach mit einer in der Regel nach oben hin offenen Einsetzöffnung für eine Wabe verstanden, und die Gesamtheit der Aufnahmen befinden sich an einem rotierbaren Korb. Ferner sei unter einer Rotationsachse eine Gerade verstanden, um die sich ein Korb oder eine Aufnahme drehen, während unter einer Drehachse die räumlich ausgebildete Achse oder Antriebswelle zu verstehen ist.

Es ist so, dass die Viskosität des Honigs und das Gewicht der Waben stark variieren kann, so dass Erfahrungswerte nicht unbedingt übertragbar sind. Da es sich bei den Waben um ein Naturprodukt handelt, haben diese kein einheitliches Gewicht. Dies versucht der Imker beim Beladen der Schleuder auszugleichen, in dem er ähnlich schwere Waben in der Schleuder gegenüber liegend platziert. Außerdem kommt es vor, dass die zur Verfügung stehende Anzahl der Waben keine symmetrische Beladung der Schleuder zulässt. Des Weiteren kann auch während des Schleudervorganges eine Unwucht entstehen. Sei es beispielsweise durch eine ungleichmäßige Entleerung der Waben oder durch den genannten Wabenbruch.

Diese Unwuchten sind bis zu einem gewissen Grad beherrschbar, jedoch können sie bei Überschreiten einer Grenze schädliche Auswirkungen auf die Lager einer Drehachse eines Korbes einer Honigschleuder haben.

Es ist die Aufgabe der Erfindung, die Belastung auf die Lager der Drehachse des Korbes aufgrund von Kräften durch entstehende Unwuchten in einer Honigschleuder zu senken.

Verfahrensmäßig wird die Aufgabe durch die Merkmale des Anspruchs 1 und insbesondere dadurch gelöst, dass die Auswirkung einer Unwucht des Korbes kontinuierlich gemessen wird, das Ergebnis an die Steuerungseinheit weitergeleitet wird und bei einer Überschreitung eines zulässigen Grenzwertes, der in der Steuerungseinheit hinterlegt ist, die Steuerungseinheit automatisch die Drehgeschwindigkeit über den Antrieb so einstellt, dass eine kritische Grenze wieder unterschritten wird, und dass die Messung durch einen Frequenzumrichter des Antriebs vorgenommen wird.

Als Messvorrichtung werden hier alle technischen Vorrichtungen verstanden, die geeignet sind, die Auswirkungen einer Unwucht des Korbes zu bestimmen bzw. dessen partielle Gewichtsveränderung zu messen. Die Messvorrichtung ist zum Messen eines physikalischen Phänomens ausgebildet ist, das mit dem Gewicht von Waben zusammenhängt. Dabei ist die Messvorrichtung in der Lage, das sich beim Ausschleudervorgang verändernde Gewicht zu berücksichtigen. Über die Veränderung der Masse über die Zeit kann der Grad der Entleerung berechnet werden. Bei einer Tangential- oder Selbstwendeschleuder kann zudem der optimale Zeitpunkt zum Wenden, beziehungswiese das Ende des Schleudervorgangs ermittelt werden. Neben der Schonung der Wellenlagerung kommt es zu einer Optimierung der benötigten Zeit in Hinblick auf möglicherweise notwendige Reparaturkosten und somit zu einer effizienteren Nutzung der Schleuder. Besonders bevorzugte Messvorrichtungen sind Beschleunigungssensoren, die heutzutage sehr kostengünstig eingesetzt werden können.

Aber es ist auch günstig, wenn das Gewicht oder die Gewichtsverteilung von Waben ermittelt wird.

Dabei ist es vorteilhaft, wenn eine Massenänderung von wenigstens zwei Waben ermittelt wird.

Wenn man bei mehreren Waben die Massenreduktion während des Schleuderprozesses ermittelt, können Rückschlüsse darüber gewonnen werden, ob sich die Waben ungleichmäßig entleeren.

Mit besonderem Vorteil wird die Masse aller Waben vor und/oder während und/oder nach dem Schleudervorgang ermittelt.

Auf diese Weise erhält man nicht nur das Gewicht der einzelnen Waben und kann ständig die Abnahme des Gewichts durch den ausgeschleuderten Honig ermitteln, sondern man erhält auch Erkenntnisse über eine Massenverteilung auf dem Umfang des Korbes. Dadurch kann in der Steuerungseinheit eine bestehende Unwucht des Korbes ermittelt werden und um die Lager des Korbes mit senkrechter Rotationsachse, beispielweise einer in Lagern gelagerten Drehachse, zu schonen, kann bei Ermittlung einer solchen Unwucht ebenfalls die Drehzahl angepasst werden, um zu große Lagerlasten zu vermeiden.

Es ist bevorzugt, wenn die Masse während des Schleudervorgangs ständig über wenigstens einen Gewichtssensor ermittelt wird.

Die erste praktikable Methode ist also eine direkte Messung einer oder mehrerer Wabengewichte. Die Abnahme des Gewichtes während des Schleudervorgangs gibt Aufschluss darüber, wie viel Honig bereits aus den Wabenzellen herausgeschleudert wurde. Der Gewichtssensor kann durch einen Kraft- oder Drucksensor gebildet werden, auf dem sich die Wabe. Vorteilhaft ist es dann, die Messwerte drahtlos an die Steuerungseinheit zu übertragen.

Alternativ oder zusätzlich ist bevorzugt, wenn die Masse bei einer Selbstwendeschleuder über die Winkelveränderung der Aufnahme in Abhängigkeit von der Drehzahl erfasst wird.

Dies ist ebenfalls eine sehr einfache Methode zur Gewichtserfassung, die allerdings nur bei Selbstwendeschleudern einsetzbar ist. Die Aufnahme steht im Stillstand radial im Behälter. Mit steigender Drehzahl wird die Aufnahme um eine senkrechte Rotations- bzw. Drehachse gegen eine rücksetzende Rückstelleinrichtung (in der Regel eine Feder oder ein Elastomer) gedreht. Aus dem gemessenen Drehwinkel bei einer bestimmten Rotationsgeschwindigkeit des Korbes kann das Gewicht der Wabe errechnet werden. Der Drehwinkel kann beispielsweise optisch erfasst werden.

Verfahren, dadurch gekennzeichnet, dass die Masse indirekt über das Trägheitsmoment des mit Waben gefüllten Korbs errechnet wird, indem Drehzahl, Antriebsmoment des Antriebs und Winkelbeschleunigung des Korbes ermittelt werden.

Alternativ ist es so über eine indirekte Messung sehr einfach möglich, die Masse der Waben zu ermitteln, indem man die Veränderung der Beschleunigung bei einer Veränderung des Antriebsmomentes misst. Dadurch kann über den Bewegungsradius auf die Veränderung der Masse rückgeschlossen und der gefundene Wert an die Steuerungseinheit übergeben werden. Dieser Vorgang kann in zeitlichen Intervallen oder ständig erfolgen.

Bevorzugt können Drehzahl und Antriebsmoment über ein bekanntes Kennlinienfeld des Motors, einem gemessenen Strom, der Spannung und der Frequenz der Versorgungsspannung des Motors errechnet werden. Sowohl und Spannung als auch die Frequenz sind durch den Frequenzumrichter ermittelbar.

Die Genauigkeit dieser indirekten Messung wird durch die Verwendung eines Direktantriebes zusätzlich erhöht. Durch die Verwendung eines Sensors zur Messung des Antriebsmomentes kann die Messgenauigkeit noch einmal erhöht werden. Da der Radius bekannt ist, auf dem die Waben kreisen, kann gemäß der Formel Trägheitsmoment = Masse mal Radius² die Masse bestimmt werden, wenn das Trägheitsmoment über die Messung der Winkelbeschleunigung bei bekanntem Drehmoment bestimmt wurde.

Verfahren, dadurch gekennzeichnet, dass unwuchtbedingte Schwingungen über wenigstens einen Beschleunigungssensor ermittelt werden.

Die Fliehkräfte sind bekanntlich vom Drehzentrum aus radial nach außen gerichtet. Folglich wird auch ein Beschleunigungssensor (in diesem Begriff ist jede Art von Schwingungssensor erfasst) in radialer Richtung montiert. Mit einer Anordnung von zwei Beschleunigungssensoren, die rechtwinkelig in horizontaler Ebene zueinander stehen, kann in der Steuerungseinheit ein genauer Wert der Unwucht ermittelt werden.

Es ist vorteilhaft, wenn sowohl wenigstens ein Beschleunigungssensor eingesetzt wird, um den Betrag der Unwucht zu erhalten, als auch ein Näherungs- oder optischer Sensor an einem feststehenden Ort in der Nähe des Korbes oder dessen Drehachse, um eine Referenz für die Winkelposition zu erhalten.

Ein geeigneter Ort für die Anbringung eines Schwingungs- oder Beschleunigungssensors ist der Behälter.

Erfindungsgemäß wird die Messung durch einen Frequenzumrichter des Antriebs vorgenommen.

Während des Motorbetriebs erfasst der Frequenzumrichter permanent unterschiedliche Messwerte, die für weitergehende Analysen verarbeitet werden. Die Grundlage ist eine sogenannte Baseline-Messung, die den Normalzustand der Anwendung im gesamten Betriebsbereich darstellt. Die Baseline wird im Betrieb mit dem Ist-Zustand abgeglichen. Abweichungen werden über entsprechend festgelegten Grenzwerte in der Steuerungseinheit hinsichtlich der Drehzahleinstellung verwertet. Ganz besonders bevorzugt, werden die Beschleunigungssensoren am Frequenzumrichter oder auf dessen Platine angebracht.

Sofern der Frequenzumrichter am Antrieb oder direkt am Motor montiert ist, kann er selbst bzw. seine Platine auch unmittelbar mit einem Beschleunigungssensor bestückt sein, um die genannten unwuchterzeugten Schwingungen zu messen und an die Steuerungseinheit weiterzugeben.

Damit kennt man genau die Wirkung der Unwucht und kann sie beispielsweise auch auf einem Monitor für den Imker darstellen. Ferner kann die Antriebssteuerung hinsichtlich der noch erlaubten Drehzahl deutlich präziser arbeiten.

Bevorzugt wird das Verfahren durch eine automatische Verlagerung von beweglichen Massen unterstützt.

Zu diesem Zweck ist das eingangs beschriebene Verfahren nach der Erfindung beispielsweise dadurch gekennzeichnet, dass vorzugsweise an dem Korb oder seiner Drehachse eine ringförmige Kammer vorgesehen wird, und dass mindestens zwei Ausgleichskörper freibeweglich in die ringförmige Kammer eingebracht werden und dass der Korb mit einer Drehzahl betrieben wird, die über der der Eigenschwingungsfrequenz liegt, so dass die Ausgleichskörper in der Kammer Stellungen einnehmen, bei denen die durch einen unausgeglichenen Belastungszustand hervorgerufene Unwucht kompensiert wird.

Selbstverständlich können auch anderen Formen von beweglichen Massen an dem Korb oder der Drehachse vorgesehen sein.

Bevorzugt wird die Veränderung der Drehzahl in Bezug auf die Gewichtsabnahme wenigstens einer Wabe oder die Unwucht auf einem Monitor grafisch angezeigt.

Der Imker, der seinen Honig gewinnen will, hat damit die Möglichkeit, den Schleuderprozess detailliert zu verfolgen Hinsichtlich der Honigschleuder zur Durchführung des Verfahrens wird die Aufgabe der Erfindung durch die Merkmale des Anspruchs 7 erfüllt und insbesondere dadurch, dass die Honigschleuder eine Messvorrichtung aufweist, die geeignet ist, physikalische Auswirkungen einer Unwucht des Korbes mittels eines Frequenzumrichters des Antriebs zu messen, der Messwert von der Messvorrichtung an die weitergebbar ist und die Drehgeschwindigkeit des Korbes von der Steuerungseinheit auf Basis des Messwertes mit Hilfe des Motors einstellbar ist.

Wie bereits bei den analogen Verfahrensansprüchen beschrieben, ist der Vorteil einer solchen Honigschleuder, dass sowohl die Waben als auch die Lagerungen des Korbes wegen ständig angepasster Drehzahl an die ermittelte Unwucht nicht überlastet werden.

Dazu ist es vorteilhaft, wenn die Korrelation zwischen Masse und zulässiger Drehgeschwindigkeit in der Steuerungseinheit hinterlegt ist. Ferner ist es günstig, wenn - wie bereits im Verfahren beschrieben - der Frequenzumrichter des Motors an der Honigschleuder befestigt ist und ein Beschleunigungssensor an oder auf einer elektrischen Platine des Frequenzumrichters angeordnet ist.

Im Folgenden soll die Erfindung anhand von Ausführungsbeispielen und vier Figuren weiter erläutert werden.

Dabei zeigen
Fig. 1 eine dreidimensionale Ansicht einer Selbstwendeschleuder gemäß der Erfindung,
Fig. 2 eine schematische Draufsicht auf eine Selbstwendeschleuder gemäß der Erfindung

Die in den Figuren gezeigten Ausführungsbeispiele beziehen sich auf Honigschleudern 1 der Kategorie Selbstwendeschleudern. Die Erfindung ist aber genauso gut auch bei einer Tangentialschleuder oder Radialschleuder nutzbar. In den Figuren beziehen sich unterschiedliche Ausführungsbeispiele nur auf eine unterschiedliche Anzahl der Aufnahmen 4 für die Waben 20.

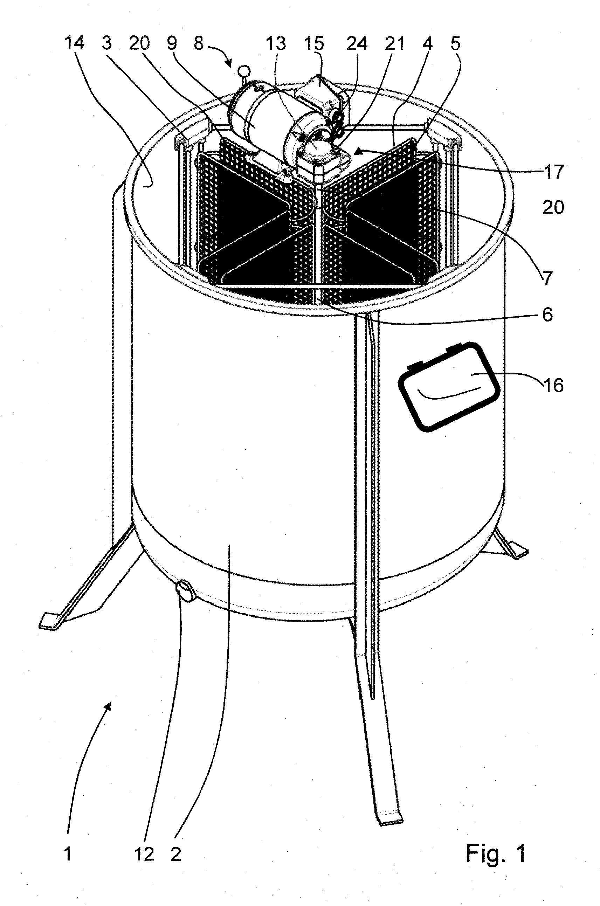

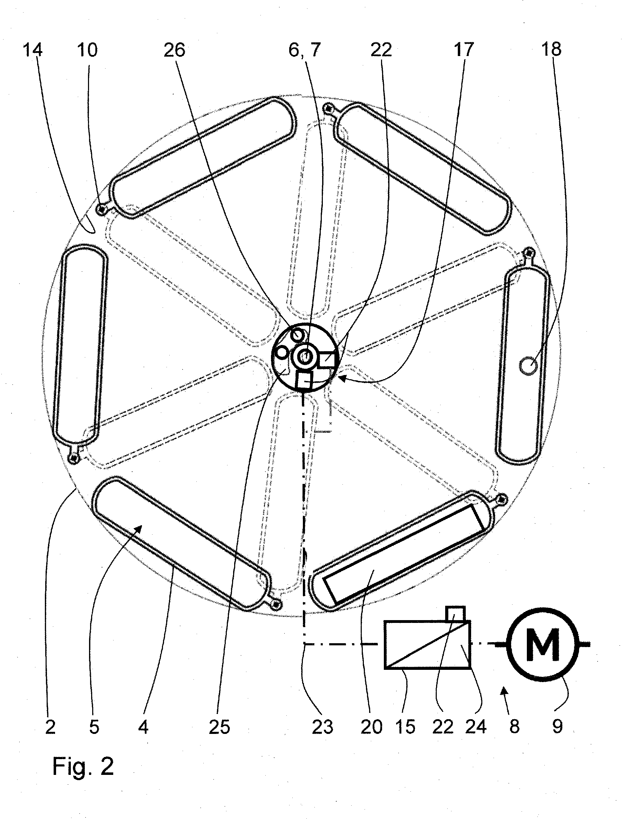

In Fig. 2 ist eine schematische Draufsicht auf die Honigschleuder gezeigt, die hier auch als Selbstwendeschleuder dargestellt ist. Die Fig stellt die aufgrund der Zentrifugalkraft geschwenkten Aufnahmen während der Drehung dar. Im befindet sich die Rotationsachse des nicht dargestellten Korbes 3, mit dem die Aufnahmen 4 verbunden sind, bzw. die Drehachse 7 des Korbes 3, die entsprechend auch die Antriebswelle sein kann. Im Stillstand befinden sich die beispielhaft gezeigten sechs Aufnahmen 4 in der gestrichelten Position. Hilfsweise ist in Fig 2. Auch die Steuerungseinheit 15 mit Frequenzumrichter 24 angedeutet, die den Motor 9 steuert. Um einen Überblick zu der erfindungsgemäßen Honigschleuder 1 zu, ist in Fig. 1 eine Selbstwendeschleuder mit vier Aufnahmen 4, dreidimensional dargestellt. Aus Gründen der Übersichtlichkeit wurde der Deckel des Behälters 2 in der Fig. 1 weggelassen.

Im Inneren des Behälters ist ein drehbarer Korb 3 vorgesehen, der über einen Antrieb 8, der einen Motor 9 umfasst, in Rotation um die Rotationsachse 6 versetzt werden kann. An diesem Korb sind die Aufnahmen 4 vorzugsweise schwenkbar gelagert, so dass sie je nach Drehrichtung aufgrund der Zentrifugalkräfte eine andere Position einnehmen. Dabei befindet sich die Rotationsachse 10 der Aufnahmen 4 näher an der Behälter-Innenwand 14 als an der Rotationsachse 6 des Korbes 3. Im Stillstand des Korbes 3 werden die Aufnahmen durch eine nicht dargestellte Rückstelleineinrichtung in die radiale Position im Korb 3 gebracht.

Die Aufnahmen 4 besitzen einen Aufnahmeraum 5 für Waben 20, die hier zur schwarz dargestellt sind. Die Aufnahmen haben in diesem Ausführungsbeispiel eine Gitterstruktur, so dass Honig aus den Waben 20 aufgrund von Zentrifugalkräften gegen die Behälter-Innenwand 14 herausgeschleudert werden kann, und zwar je nach Drehrichtung entweder von der ersten oder der zweiten Wabenseite.

Der Honig rinnt dann die Behälter-Innenwand 14 hinunter und kann aus der Auslassöffnung 12 entnommen werden. Verständlicherweise nimmt das Gewicht der Waben dabei ab, was Einfluss auf die Festigkeit der Wabe 20 als auch auf eine mögliche Unwucht des Korbes 3 hat.

Um das Gewicht der Waben bzw. die Unwucht während des Schleuderprozesses kontinuierlich zu überwachen, ist mindestens eine Messvorrichtung 17 vorgesehen, die Erkenntnisse über das Gewicht der Waben 20 gibt und diesen Messwert an eine Steuerungseinheit 15 des Antriebs 8 weitergibt, wodurch direkt steuerungstechnisch über den Motor 9 Einfluss auf die Drehzahl des Korbes 3 genommen werden kann, um Schäden zu vermeiden. Die möglichen Schäden beziehen sich dabei einerseits auf eine zu hohe Beanspruchung der Waben, aber in erster Linie in dieser Erfindung auf die Überbelastung der Lager der Drehachse des Korbes 3. Man kann dementsprechend eine automatische Regelung der Drehzahl des Korbes einrichten, so dass eine kritische Grenze für die Zentrifugalkraft nicht überschritten wird.

Die Messvorrichtung 17, die die Auswirkung einer Unwucht des Korbes 3 kontinuierlich misst, kann mit unterschiedlichen physikalischen Messverfahren arbeiten. So ist beispielhaft in Fig. 1 ein Sensor 21 zur Ermittlung des Trägheitsmomentes vorgesehen, aus dessen Messwert sich das Gewicht der Wabe rechnerisch ermitteln lässt.

Oder als alternatives oder zusätzliches Verfahren ist in Fig. 2 beispielhaft ein Kraft- oder Gewichtssensor 18 in der Aufnahme 4 angebracht, der zum Beispiel als piezoelektronischer Aufnehmer seine Messdaten auch drahtlos kann. Oder als drittes Beispiel könnte ein Winkelmesser vorgesehen sein, der den Ausschlag der Aufnahme 4 aufgrund der Zentrifugalkraft gegen die Kraft der Rückstelleineinrichtung bestimmt und somit auch das Gewicht anzeigen kann. Der Ausschlagwinkel kann auch über optoelektronische Verfahren ermittelt werden.

In jedem dieser möglichen Messverfahren zur Bestimmung der Gewichtsänderung der Waben können vor einem Schleudervorgang die Sensoren auf den leeren oder den mit Waben in den Aufnahmen gefüllten Korb kalibriert werden.

Bevorzugt werden die Gewichts- bzw. Massenveränderungen von mindestens zwei oder sogar allen Waben verfolgt. Dann wird das System sicherer und außerdem können auch Unwuchten des Korbes besser erfasst werden.

Alternativ oder zusätzlich kann die Unwucht aber auch dadurch bestimmt, dass unwuchtbedingte Schwingungen über wenigstens einen Beschleunigungssensor ermittelt werden.

Neben dem Beschleunigungssensor kann ein Näherungs- oder optischer Sensor am Korb oder dessen Drehachse eingesetzt werden, um eine Referenz für die Winkelposition zu erhalten.

Derartige Sensoren sind in der Figur lediglich durch ein Symbol mit dem Bezugszeichen 22 angedeutet und sind Bestandteil einer allgemeinen Messeinrichtung 17.

Über Steuerleitungen 23 werden die Messergebnisse an die Steuerungseinheit 15 im Antrieb 8 weitergegeben, die den Motor 9 regelt.

Die Beschleunigungssensoren können aber auch direkt am Frequenzumrichter oder auf dessen elektrischer Platine montiert sein.

Weitere Informationen über die Stromaufnahme, die mit steigender Unwucht durch die höhere Reibung in den Lagern steigt, die aufgenommen Spannung und Frequenzschwankungen können über den im Antrieb vorgesehenen Frequenzumrichter 24 erfasst werden.

In der Steuerungseinheit 15 ist eine maximale Drehzahl in Abhängigkeit des Wabengewichtes bzw. der Wabengewichtsverteilung hinterlegt. Auf einem Monitor 16 kann der Betreiber der Honigschleuder beispielsweise den genauen Verlauf der Drehzahlveränderung verfolgen. Der Monitor könnte auch durch ein Tablet oder Smartphone gebildet sein.

### Bezugszeichenliste

| | |
|---|---|
| 1 | Honigschleuder |
| 2 | Behälter |
| 3 | Korb |
| 4 | Aufnahme |
| 5 | Aufnahmeraum |
| 6 | Rotationsachse Korb |
| 7 | Drehachse Korb |
| 8 | Antrieb |
| 9 | Motor |
| 10 | Rotationsachse Aufnahme |
| 11 | Drehachse Aufnahme |
| 12 | Auslassöffnung |
| 13 | Drehlager |
| 14 | Behälter-Innenwand |
| 15 | Steuerungseinheit |
| 16 | Monitor |
| 17 | Messvorrichtung |
| 18 | Gewichtssensor, Kraftsensor |
| 20 | Wabe |
| 21 | Sensor zur Ermittlung des Trägheitsmomentes |
| 22 | Beschleunigungssensor/Näherungssensor |
| 23 | Steuerleitung |
| 24 | Frequenzumrichter |
| 25 | Ringkammer |
| 26 | Bewegliche Masse |

## Patentansprüche

1. Verfahren zum Ausschleudern von Waben (20) in einem Behälter (2), in Waben in Aufnahmen (4) eines drehbaren Korb (3) mit einer Rotationsachse (6) eingesetzt werden, danach der Korb (3) über einen Antrieb (8), der einen Motor (9) umfasst, in Rotation versetzt wird, so dass der Honig aufgrund der Zentrifugalkraft aus den Wabenzellen herausgetrieben wird und an einer Behälterwand (14) zu einer Auslassöffnung (12) herunterrinnt, wo der Honig entnommen wird, und wobei die Drehgeschwindigkeit des Korbes (3) über eine Steuerungseinheit (15) auf einen Wert eingestellt wird, mit dem die Waben durch die auftretende Zentrifugalkraft nicht beschädigt werden,
**dadurch gekennzeichnet, dass**
Auswirkung einer Unwucht des Korbes (3) kontinuierlich gemessen wird, das Ergebnis an die Steuerungseinheit (15) weitergeleitet wird und bei einer Überschreitung eines zulässigen Grenzwertes, der in der Steuerungseinheit (15) hinterlegt ist, die Steuerungseinheit (15) automatisch die Drehgeschwindigkeit über den Antrieb (8) so einstellt, dass eine kritische Grenze wieder unterschritten wird und dass die Messung durch einen Frequenzumrichter (24) des Antriebs (8) vorgenommen wird.

2. Verfahren gemäß Anspruch 1, **dadurch gekennzeichnet, dass** das Gewicht oder die Gewichtsverteilung von Waben (20) ermittelt wird.

3. Verfahren gemäß einem der Ansprüche 1 bis 2, **dadurch gekennzeichnet, dass** unwuchtbedingte Schwingungen über wenigstens einen Beschleunigungssensor (22) ermittelt werden.

4. Verfahren gemäß Anspruch 3, **dadurch gekennzeichnet, dass** sowohl wenigstens ein Beschleunigungssensor (22) eingesetzt wird, um den Betrag der Unwucht zu erhalten, als auch ein Näherungs- oder optischer Sensor am Korb (3) oder dessen Drehachse (7), um eine Referenz für die Winkelposition zu erhalten.

5. Verfahren gemäß Anspruch 1, **dadurch gekennzeichnet, dass** es durch eine automatische Verlagerung von beweglichen Massen (26) unterstützt wird.

6. Verfahren gemäß einem der Ansprüche 1 bis 5, **dadurch gekennzeichnet, dass** die Veränderung der Drehzahl in Bezug auf die Gewichtsabnahme wenigstens einer Wabe oder die Unwucht auf einem Monitor (16) grafisch angezeigt wird.

7. Honigschleuder zur Durchführung des Verfahrens nach einem der Ansprüche 1 bis 6, **dadurch gekennzeichnet, dass** die Honigschleuder eine Messvorrichtung (17) aufweist, die geeignet ist, physikalische Auswirkungen einer Unwucht des Korbes (3) mittels eines Frequenzumrichters des Antriebs (8) zu messen, der Messwert von der Messvorrichtung an eine Steuerungseinheit (15) weitergebbar und die Drehgeschwindigkeit des Korbes (3) von der Steuerungseinheit (15) auf Basis des Messwertes mit Hilfe eines Motors (9) einstellbar ist.

8. Honigschleuder gemäß Anspruch 7, **dadurch gekennzeichnet, dass** ein Frequenzumrichter (24) des Motors (9) an der Honigschleuder befestigt ist.

9. Honigschleuder gemäß Anspruch 8, **dadurch gekennzeichnet, dass** ein Beschleunigungssensor (22) an oder auf einer elektrischen Platine des Frequenzumrichters (24) angeordnet ist.

## Claims

1. Method for centrifuging combs (20) in a container (2), in which combs are inserted into compartments (4) of a rotatable basket (3) having an axis of rotation (6), then the basket (3) is set in rotation by means of a drive (8) which comprises a motor (9) so that the honey is expelled from the comb cells because of the centrifugal force and runs down along a container wall (14) to an outlet opening (12), where the honey is removed, wherein the rotation speed of the basket (3) is adjusted by means of a control unit (15) to a value at which the combs are not damaged by the centrifugal force that occurs,
**characterised in that**
the effect of an imbalance of the basket (3) is continuously measured, the result is forwarded to the control unit (15) and, if a permissible limit value stored in the control unit (15) is exceeded, the control unit (15) automatically adjusts the rotation speed by means of the drive (8) so as to fall below a critical limit again, and **in that** the measurement is carried out by a frequency converter (24) of the drive (8).

2. Method according to Claim 1, **characterised in that** the weight or the weight distribution of combs (20) is ascertained.

3. Method according to any one of Claims 1 to 2, **characterised in that** vibrations due to imbalance are ascertained by means of at least one acceleration sensor (22).

4. Method according to Claim 3, **characterised in that** both at least one acceleration sensor (22) is used in order to obtain the magnitude of the imbalance and a proximity or optical sensor at a fixed location in the vicinity of the basket (3) or its axle (7) is used in order obtain a reference for the angular position.

5. Method according to Claim 1, **characterised in that** it is assisted by an automatic displacement of moving masses (26).

6. Method according to any one of Claims 1 to 5, **characterised in that** the variation of the rate of rotation in relation to the reduction in weight of at least one comb or the imbalance is displayed graphically on a monitor (16).

7. Honey extractor for carrying out the method according to any one of Claims 1 to 6, **characterised in that** the honey extractor has a measuring device (17) which is suitable for measuring physical effects of an imbalance of the basket (3) by means of a frequency converter of the drive (8), the measured value can be forwarded from the measuring device to a control unit (15) and the rotation speed of the basket (3) can be adjusted by the control unit (15) on the basis of the measured value with the aid of a motor (9).

8. Honey extractor according to Claim 7, **characterised in that** a frequency converter (24) of the motor (9) is attached to the honey extractor.

9. Honey extractor according to Claim 8, **characterised in that** an acceleration sensor (22) is arranged at or on an electrical circuit board of the frequency converter (24).

## Revendications

1. Procédé pour extraire des nids d'abeilles (20) dans un récipient (2), dans lequel des nids d'abeilles sont insérés dans des logements (4) d'un panier rotatif (3) avec un axe de rotation (6), après quoi le panier (3) est mis en rotation par un entraînement (8) comprenant un moteur (9), de sorte que le miel est expulsé des cellules alvéolaires sous l'effet de la force centrifuge et s'écoule le long d'une paroi du récipient (14) vers une ouverture de sortie (12) où le miel est prélevé, et la vitesse de rotation du panier (3) étant réglée par le biais d'une unité de commande (15) sur une valeur afin d'éviter que la force centrifuge qui se produit puisse endommager les nids d'abeilles,
**caractérisé en ce que**
les conséquences d'un déséquilibre du panier (3) sont mesurées en continu, le résultat est transmis à l'unité de commande (15) et, lors d'un dépassement d'une valeur limite admissible enregistrée dans l'unité de commande (15), l'unité de commande (15) règle automatiquement la vitesse de rotation par le biais de l'entraînement (8) de sorte à repasser en dessous d'une limite critique et **en ce que** la mesure est effectuée par un convertisseur de fréquence (24) de l'entraînement (8).

2. Procédé selon la revendication 1, **caractérisé en ce que** le poids ou la répartition du poids des nids d'abeilles (20) est déterminé(e).

3. Procédé selon l'une quelconque des revendications 1 à 2, **caractérisé en ce que** des vibrations dues à un déséquilibre sont déterminées par le biais d'au moins un capteur d'accélération (22).

4. Procédé selon la revendication 3, **caractérisé en ce que** l'on utilise à la fois au moins un capteur d'accélération (22) pour obtenir la valeur du déséquilibre, et un capteur de proximité ou optique sur le panier (3) ou son axe de rotation (7) pour obtenir une référence pour la position angulaire.

5. Procédé selon la revendication 1, **caractérisé en ce qu'**il est assisté par un déplacement automatique de masses mobiles (26).

6. Procédé selon l'une quelconque des revendications 1 à 5, **caractérisé en ce que** la modification de la vitesse de rotation par rapport à la diminution de poids d'au moins un nid d'abeille ou au déséquilibre est affichée graphiquement sur un écran (16).

7. Extracteur de miel pour l'application du procédé selon l'une quelconque des revendications 1 à 6, **caractérisé en ce que** l'extracteur de miel présente un dispositif de mesure (17) apte à mesurer les effets physiques d'un déséquilibre du panier (3) par le biais d'un convertisseur de fréquence de l'entraînement (8), la valeur mesurée pouvant être transmise par le dispositif de mesure à une unité de commande (15) et la vitesse de rotation du panier (3) pouvant être réglée par l'unité de commande (15) en fonction de la valeur mesurée à l'aide d'un moteur (9).

8. Extracteur de miel selon la revendication 7, **caractérisé en ce qu'**un convertisseur de fréquence (24) du moteur (9) est fixé sur l'extracteur de miel.

9. Extracteur de miel selon la revendication 8, **caractérisé en ce qu'**un capteur d'accélération (22) est agencé dans ou sur une platine électrique du convertisseur de fréquence (24).
